**Europäisches Patentamt**

(19) **European Patent Office**

**Office européen des brevets**

(11) Numéro de publication: **0 112 221 B1**

(12) # FASCICULE DE BREVET EUROPEEN

(45) Date de publication du fascicule du brevet: 24.06.87

(51) Int. Cl.⁴: **H 04 B 1/04**

(21) Numéro de dépôt: **83402294.9**

(22) Date de dépôt: **29.11.83**

---

(54) **Dispositif de commutation pour choisir un modulateur, parmi deux, et le brancher dans un émetteur.**

---

(30) Priorité: **10.12.82 FR 8220765**

(43) Date de publication de la demande: **27.06.84 Bulletin 84/26**

(45) Mention de la délivrance du brevet: **24.06.87 Bulletin 87/26**

(84) Etats contractants désignés: **CH DE GB IT LI NL**

(56) Documents cités:
**US - A - 2 840 696**

**N.E.C., RESEARCH AND DEVELOPMENT, no. 63, octobre 1981, pages 83-91, Tokyo, JP, S. HIGASHI et al.: "All solid state VHF FM broadcasting transmitters" TELECOMMUNICATIONS & RADIO ENGINEERING, vol. 30/31, no. 8, août 1976, pages 17-21; Washington, US, M.M. KOZLOVSKIY et al.: "Automatic systems for monitoring and control of stand-by television transmitters" FERNMELDE-PRAXIS, vol. 50, no. 16, 25 août 1973, pages 689-712, Berlin, DE, J. HEYDEL: "Fernsehumsetzer in Reserveschaltung"**

(73) Titulaire: **THOMSON-CSF, 173, Boulevard Haussmann, F-75379 Paris Cedex 08 (FR)**

(72) Inventeur: **Blum, Guy, THOMSON-CSF SCPI 173, bld Haussmann, F-75379 Paris Cedex 08 (FR)**

(74) Mandataire: **Courtellemont, Alain et al, THOMSON-CSF SCPI 19, avenue de Messine, F-75008 Paris (FR)**

---

## Description

La présente invention se rapporte à un dispositif de commutation destiné à permettre de choisir un modulateur, parmi deux, pour l'utiliser dans un émetteur.

Le choix du modulateur à utiliser dans un émetteur se pose lorsque, pour des questions de puissance d'émission et de sécurité de fonctionnement, deux émetteurs sont couplés pour émettre un ou plusieurs signaux mais peuvent également être dissociés de manière à émettre de façon autonome. En effet dans une telle utilisation chacun des deux émetteurs a son modulateur mais, lorsque les émetteurs sont couplés un des modulateurs sert dans les deux émetteurs; or, pour les raisons de sécurité de fonctionnement évoquées plus avant, il est nécessaire, si l'un des deux modulateurs est en panne, de brancher automatiquement l'autre dans les deux émetteurs.

Il est connu d'effectuer l'ensemble des commandes relatives au fonctionnement de deux émetteurs associés, grâce à un circuit de commande, également appelé circuit d'automaticité de couplage. Pour tenir compte du fait qu'un défaut d'un des émetteurs ou d'un des modulateurs peut n'être que fugitif, ce circuit de commande n'effectue le branchement d'un modulateur dans un émetteur qu'avec une temporisation qui peut être de plusieurs secondes. Dans ces conditions si un modulateur tombe en panne il y a un risque d'incident de transmission, pouvant aller jusqu'à déclencher d'autres pannes et empêcher donc que la transmission normale soit rétablie lorsque, après la temporisation, le modulateur défectueux est remplacé par l'autre modulateur. Ce problème se rencontre, en particulier, en télévision lorsque deux émetteurs «son» sont couplés.

Le but de la présente invention est d'assurer à vitesse électronique, c'est-à-dire sans temporisation, aussi bien la coupure que la mise en service des modulateurs de deux émetteurs destinés à un fonctionnement couplé.

Ceci est réalisé grâce à un dispositif de commutation associé à chaque émetteur et qui, pour décider des branchements à effectuer, reçoit directement les signaux de défauts éventuels des modulateurs et tient compte en priorité de ces signaux de défauts pour le choix du modulateur à brancher.

Selon l'invention, un dispositif de commutation pour choisir un modulateur parmi deux et le brancher dans un premier émetteur, l'un des modulateurs étant le modulateur associé au premier émetteur et l'autre modulateur étant le modulateur associé à un second émetteur, est caractérisé en ce qu'il reçoit directement des signaux de défauts éventuels des deux modulateurs ainsi que des signaux de commande représentatifs du modulateur dont le branchement est désiré dans le premier émetteur et en ce qu'il comporte: des moyens électroniques pour élaborer en fonction des signaux qu'il reçoit, des signaux de commutation indiquant le modulateur à brancher dans le premier émetteur, ces moyens étant conçus pour, lorsque les signaux de défauts éventuels indiquent qu'un seul des modulateurs est défectueux, décider le branchement du modulateur dont le fonctionnement est correct quels que soient les signaux de commande; et un interrupteur électronique pour réaliser le branchement de l'un ou l'autre des modulateurs en fonction des signaux de commutation.

Par ailleurs il est à noter que le brevet US-A-2 840 696 décrit, à l'aide de sa figure 1, un montage dans lequel il est possible à l'aide de deux commutateurs de choisir un circuit d'excitation parmi deux afin d'exciter deux circuits d'émission couplés; le montage permet, après réparation d'un des deux circuits d'émission, de remettre en marche ce circuit sans interrompre pour cela le fonctionnement de l'autre. Un tel montage pourrait relativement facilement être équipé d'un dispositif selon l'invention dont l'interrupteur électronique serait un interrupteur électronique double qui remplacerait les deux commutateurs.

La présente invention sera mieux comprise et d'autres caractéristiques apparaîtront à l'aide de la description ci-après et des figures s'y rapportant qui représentent:

la fig. 1 un ensemble de deux émetteurs couplés avec deux dispositifs de commutation selon l'invention,

la fig. 2 un schéma détaillé de l'un des dispositifs de commutation de la figure 1.

D'une figure à l'autre les éléments et les signaux correspondants sont désignés par les mêmes repères.

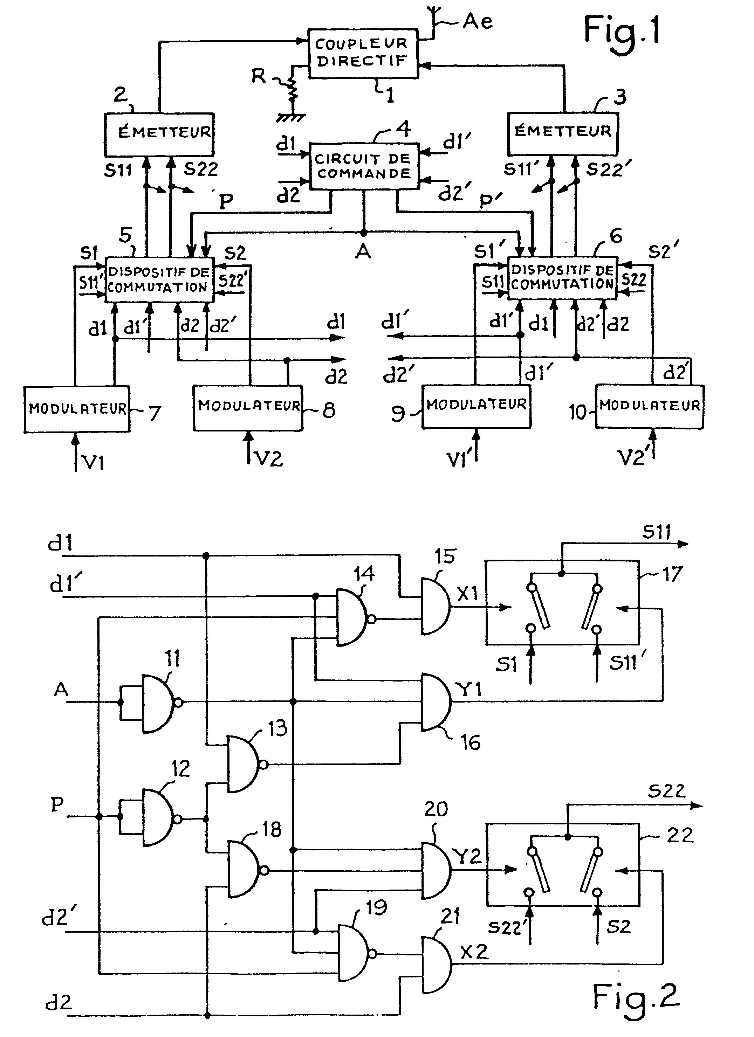

La fig. 1 est un schéma d'un ensemble comportant deux émetteurs «son» 2,3 couplés au moyen d'un coupleur directif à 3 dB, 1, qui les réunit à une même antenne. Ae; sur le coupleur directif 1 est branchée une charge d'équilibrage R.

Les émetteurs 2 et 3 ont deux modulateurs de fréquence, respectivement 7, 8 et 9, 10, qui leur sont propres et qui sont relatifs à deux voies «son»: une première voie «son» correspondant aux modulateurs 7 et 9 et une deuxième voie «son» correspondant aux modulateurs 8 et 10. Les rectangles 2 et 3 de la figure 1 sont donc des émetteurs sans leurs modulateurs; cette représentation est due au fait que, lorsqu'ils fonctionnent en étant couplés par le coupleur 1, un seul des modulateurs 7 et 9 est utilisé pour la première voie «son» des deux émetteurs et un seul des modulateurs 8 et 10 est utilisé pour la deuxième voie «son» des deux émetteurs. Dans les réalisations connues le choix des modulateurs à utiliser est effectué au moyen d'un circuit de commande aussi appelé circuit d'automaticité de couplage. Dans les réalisations connues, ce circuit de commande effectue le choix des modulateurs avec une temporisation de plusieurs secondes pour tenir compte du fait qu'un défaut dans un émetteur peut être fugitif; mais il y a arrêt momentané de l'émission. Dans la réalisation selon l'invention un circuit de commande, 4, est également utilisé; dans le cas de l'exemple décrit, ce circuit de commande 4 correspond aux circuits selon les réalisations connues mais sans les commutateurs pour le branchement des modulateurs et sans les circuits électroniques pour la commande de ces circuits. Le circuit de commande 4 de la figure 1 reçoit les différents signaux de commande donnés par un opérateur et les différents signaux de défauts éventuels relatifs aux deux émetteurs 2 et 3 et à leurs modulateurs 7, 8, 9, 10; parmi ces signaux, seuls les signaux d1, d2, d1′, d2′, relatifs respectivement à des défauts des modulateurs 7, 8, 9 et 10, ont été représentés, au moins partiellement, par leurs liaisons, sur la figure 1.

Le circuit de commande 4 délivre trois signaux de commande:

– un signal A qui prend la valeur 1 logique lorsque les deux émetteurs doivent fonctionner de façon autonome, sans le coupleur 1, par exemple lors d'opérations de vérification, de maintenance ou de dépannage sur les émetteurs; lorsque le signal A prend la valeur 0 logique un fonctionnement couplé des deux émetteurs et désiré

– un signal P qui prend la valeur 0 logique lorsqu'il est désiré que, dans un fonctionnement couplé, les modulateurs 7 et 8 soient utilisés et qui prend la valeur 1 logique dans le cas contraire

un signal P′ qui prend la valeur 0 logique lorsqu'il est désiré que, dans un fonctionnement couplé, les modulateurs 9 et 10 soient utilisés et qui prend la valeur 1 logique dans le cas contraire; en fait le signal P′ et égal à l'inverse, $\overline{P}$, du signal P puisque, en fonctionnement couplé, par hypothèse le choix se fait soit sur les modulateurs de l'émetteur 2 soit sur ceux de l'émetteur 3.

Les modulateurs 7 à 10 fournissent, en réponse à leurs signaux d'entrée V1, V2, V1′, V2′, des signaux de modulation S1, S2, S1′, S2′. Au sujet des signaux V1, V2, V1′, V2′ il est à remarquer que, lors d'un fonctionnement couplé des deux émetteurs, V1 et V1′ sont identiques de même que V2 et V2′, c'est-à-dire que les signaux à moduler sont appliqués sur l'entrée des modulateurs qui ne sont pas branchés, de manière à leur permettre de remplacer sans attendre les autres modulateurs si ces derniers venaient à être défaillants.

La liaison entre le modulateurs 7 à 10 et l'émetteur 2 se fait à travers un dispositif de commutation 5 qui fournit à l'émetteur 2 des signaux S11 et S22; ces signaux correspondent, comme il apparaîtra plus loin, à des signaux choisis (compte tenu des modulations à transmettre) parmi les signaux de sortie de ceux des modulateurs 7 à 10 qui fonctionnent correctement. De même un dispositif de commutation 6 fournit à l'émetteur 3 des signaux S11′ et S22′ qui sont choisis parmi les signaux de sortie des quatre modulateurs 7 à 10.

Les signaux de défauts d1, d2, d1′, d2′ ainsi que le signal A et le signal P et les signaux de modulation S1, S2, S11′, S22′ sont appliqués à l'entrée du dispositif de commutation 5 dont un schéma détaillé est donné à l'aide de la figure 2. Il est à noter que les signaux de défauts éventuels sont envoyés directement des modulateurs 7 à 10 vers le dispositif de commutation 5, c'est-à-dire sans les retards auxquels ils sont soumis dans le circuit de commande 4.

Les signaux de défauts éventuels d1, d2, dl′, d2′ sont obtenus, comme dans les réalisations connues, par des circuits de surveillance à seuils qui reçoivent sur leur entrée une tension de la boucle de contrôle automatique de fréquence du modulateur et qui fournissent un signal de défaut lorsque cette tension sort des limites déterminées par les seuils de ces circuits de surveillance.

Le dispositif de commutation 5 est conçu pour envoyer sur l'émetteur 2 deux signaux: un signal S11 qui peut être le signal S1 du modulateur 7 ou le signal S11′ du dispositif de commutation 6 et un signal S22 qui peut être le signal S2 du modulateur 8 ou le signal S22′ du dispositif de commutation 6.

La figure 2 est un schéma détaillé du dispositif de commutation 5 de la figure 2; ce schéma a été réalisé d'après les résultats de la mise en équations des conditions d'envoi des signaux modulés S1, S2, S11′, S22′ vers l'émetteur 2.

En algèbre de Boole ces conditions peuvent s'écrire

– pour l'autorisation d'envoi du signal S1:

$$x1 = d1.A + \overline{A}.\overline{P}.d1 + \overline{A}.P.d1 \cdot \overline{d1'}$$

– pour l'interdiction d'envoir du signal S1:

$$x'1 = \overline{d1}.A + \overline{d1} \cdot \overline{A}.\overline{P}.$$

– pour l'autorisation d'envoi du signal S11′:

$$y1 = d1' \cdot \overline{A}.P. + d1' \cdot \overline{d1} \cdot \overline{A}.\overline{P}$$

– pour l'interdiction d'envoi du signal S11′:

$$y'1 = A + \overline{A}\,\overline{d1'}$$

L'équation donnant l'autorisation, x1, d'envoi du signal S1 signifie qu'il y aura autorisation de l'envoi du signal de sortie du modulateur 7 vers l'émetteur 2

– si le modulateur 7 fonctionne correctement (d1 = 1) et si les émetteurs 2 et 3 sont en fonctionnement autonome (A = 1)

– ou si les émetteurs sont en fonctionnement couplé ($\overline{A}$ = 1) et si le modulateur 7 est choisi ($\overline{P}$ = 1) et si le modulateur 7 fonctionne correctement (d1 = 1)

– ou si les émetteurs sont en fonctionnement couplé et si le modulateur 9 est choisi ($\overline{P}$ = 1) mais que le modulateur 7 fonctionne correctement (d1 = 1) tandis que le modulateur 9 est en panne ($\overline{d1}$ = 1)

La signification, en clair, des équations donnant x'1, y1, y'l se déduit facilement de ce qui a été dit pour x1, elle ne sera donc pas donnée dans cette description.

Les équations donnant x1, x′1, y1, y′1 permettent d'écrire les conditions de commande d'un premier commutateur électronique 17 (4053B de RCA ou MOTOROLA) schématisé par un commutateur mécanique sur la figure 2. Le commutateur 17 est utilisé pour l'envoi du signal S11, c'est-à-dire soit S1 soit S11′, vers l'émetteur 2:

– pour l'envoi du signal S1 du modulateur 7 (c'est-à-dire du modulateur local vis-à-vis de l'émetteur 2) la commande est $X1 = \overline{x1 \cdot x'1}$ ce qui donne après simplification $X1 = d1 \cdot A \cdot P \cdot d1'$; ceci veut dire que le commutateur 17 sera passant pour le signal S1 si le modulateur 7 fonctionne correctement, à moins que les émetteurs soient en fonctionnement couplé ($\overline{A} = 1$), que le modulateur 9 soit choisi (P = 1) et que le modulateur 9 fonctionne correctement (d1′ = 1).

– pour l'envoi du signal S11′ du modulateur 9 (c'est-à-dire du modulateur «à distance» vis-à-vis de l'émetteur 2), la commande est $Y1 = \overline{y1 \cdot y'1}$ $= d1' \cdot \overline{A} \cdot \overline{P} \cdot d1$ ce qui veut dire que le commutateur 17 sera passant pour le signal S11′ si le modulateur 9 fonctionne correctement (d1′ = 1) et si les émetteurs sont en fonctionnement couplé ($\overline{A} = 1$), à moins que le modulateur 7 soit choisi ($\overline{P} = 1$) et qu'il fonctionne correctement (d1 = 1).

Les conditions de commande d'un second commutateur vidéo 22, identique au premier, pour l'envoi du signal S22 (c'est-à-dire soit S2 soit S22′) vers l'émetteur 2, se déduisent des conditions ci-avant en remplaçant les 1 par des 2:

$$X2 = d2 \cdot \overline{\overline{A} \cdot \overline{P} \cdot d2'}$$
$$Y2 = d2' \cdot \overline{A} \cdot \overline{P} \cdot d2$$

La figure 2 montre comment peut être réalisé le circuit logique en fonction des conditions de commande des commutateurs 17 et 22. Ce circuit comporte deux portes NON-ET (NAND dans la littérature anglosaxonne) 11, 12 montées en inverseurs par réunion de leurs deux entrées, quatre portes NON-ET dont deux à deux entrées 13, 18, et deux à trois entrées 14, 19, et quatre portes ET dont deux à deux entrées 15, 21 et deux à trois entrées 16, 20.

Le signal d1 est appliqué sur la première entrée des portes 13 et 15, le signal d1′ sur la première entrée des portes 14, 16, les signal A sur l'entrée de l'inverseur 11, le signal P sur la deuxième entrée de la porte 14, sur l'entrée de l'inverseur 12 et sur la troisième entrée de la porte 19, le signal d2′ sur la première entrée de la porte 19 et sur la troisième entrée de la porte 20, le signal d2 sur la deuxième entrée des portes 18 et 21.

La sortie de l'inverseur 11 est reliée à la troisième entrée de la porte 14, à la deuxième entrée des portes 16 et 19 et à la première entrée de la porte 20. La sortie de l'inverseur 12 est reliée à la seconde entrée de la porte 13 et à la première entrée de la porte 18. La sortie de la porte 13 est reliée à la troisième entrée de la porte 16. La sortie de la porte 14 est reliée à la seconde entrée de la porte 15. La porte 15 fournit le signal X1 et la porte 16 le signal Y1.

La sortie de la porte 18 est reliée à la deuxième entrée de la porte 20. La sortie de la porte 19 est reliée à la première entrée de la porte 21. La porte 21 fournit le signal X2 et la porte 20 fournit le signal Y2.

Le dispositif de commutation 6 relatif à l'émetteur 3 est identique au dispositif de commutation 5 et les signaux qui arrivent ou sortent des deux dispositifs de commutation portent les mêmes références aux accents près: d1, d1′, d2, d2′, S1, S2, S11, S22, S11′, S22′ sont respectivement remplacés par d1′, d1, d2′, d2, S1′, S2′, S11′, S22′, S11 et S22.

L'invention n'est pas limitée à l'exemple décrit, c'est ainsi que dans le cas où les émetteurs comportent une seule voie «son» et donc un seul modulateur «son» (par exemple le modulateur 7 pour l'émetteur 2), le dispositif de commutation selon la figure 2 se simplifie par suppression des éléments 18 à 22. De même les circuits logiques pour fournir des signaux tels que X1 et Y1 peuvent être réalisés d'une façon autre que ce qui est représenté sur la figure 2 puisque, en particulier, le signal X1 peut aussi s'écrire $X1 = d1 \, (A + A \cdot P + A \cdot P \cdot d1')$ et que le signal Y1 peut s'écrire $Y1 = d1' \cdot A \cdot (P + d1 \cdot P)$.

Par ailleurs, le dispositif 5 peut travailler avec les signaux S1′ et S2′ à la place des signaux S11′ et S22′, de même que le dispositif 6 peut travailler avec les signaux S1 et S2 à la place des signaux S11 et S22. Il n'y a alors rien à changer aux dispositifs 5 et 6; mais dans ce cas lorsque, par exemple dans l'enceinte contenant l'ensemble émetteur 3-6-9-10, le modulateur 9 est défaillant, le signal douteux S1′ est amené dans l'enceinte contenant l'ensemble émetteur 2-5-8-9 et peut y produire des perturbations par couplage; avec le signal S11′ cet inconvénient est évité puisque S11′ est constitué soit par un signal S1 ou S1′ correct, soit par un signal nul si les modulateurs 7 et 9 sont défectueux.

## Revendications

1. Dispositif de commutation pour choisir un modulateur parmi deux (7, 9) et le brancher dans un premier émetteur (2), l'un (7) des modulateurs étant le modulateur associé au premier émetteur et l'autre modulateur (9) étant le modulateur associé à un second émetteur (3), caractérisé en ce qu'il reçoit directement des signaux de défauts éventuels (d1, d1′) des deux modulateurs ainsi que des signaux de commande (A, P) représentatifs du modulateur dont le branchement est désiré dans le premier émetteur et en ce qu'il comporte: des moyens électroniques (11–16) pour élaborer en fonction des signaux qu'il reçoit, des signaux de commutation (X1, Y1) indiquant le modulateur à brancher dans le premier émetteur, ces moyens étant conçus pour, lorsque les signaux de défauts éventuels indiquent qu'un seul des modulateurs est défectueux, décider le branchement du modulateur dont le fonctionnement est correct quels que soient les signaux de commande; et un interrupteur électronique (17) pour recevoir les signaux de commutation et réaliser le branchement indiqué par les signaux de commutation.

2. Dispositif de commutation selon la revendication 1, caractérisé en ce que les moyens sont conçus pour élaborer, comme signaux de commutation, les signaux $X1 = d1 \cdot \overline{A} \cdot P \cdot d1'$ et $Y1 = d1' \cdot \overline{A} \cdot P \cdot d1$ où Y1 et Y1 sont respectivement les signaux relatifs au branchement de l'un (7) et de l'autre (9) des modulateurs dans le premier émetteur, où d1, d1' sont les signaux de défauts éventuels relatifs à l'un (7) et à l'autre (9) des modulateurs, où A et P sont les signaux de commande et représentent respectivement une commande en fonctionnement autonome des deux émetteurs et une commande de branchement de l'autre modulateur (9) dans le premier émetteur (2).

**Patentansprüche**

1. Schaltvorrichtung zur Auswahl eines von zwei Modulatoren (7, 9) und zum Anschluss des ausgewählten Modulators an einen ersten Sender (2), wobei einer der Modulatoren (7) dem ersten Sender und der andere (9) dem zweiten Sender (3) zugeordnet ist, dadurch gekennzeichnet, dass sie unmittelbar eventuelle Fehlersignale (d1, d1') der beiden Modulatoren sowie Steuersignale (A, P) zugeführt erhält, die den Modulator bezeichnen, dessen Anschluss an den ersten Sender gewünscht wird, dass sie elektronische Mittel (11 bis 16) aufweist, um abhängig von den zugeführten Signalen Schaltsignale (X1, Y1) zu erzeugen, die den an den ersten Sender anzuschliessenden Modulator bezeichnen, wobie diese Mittel so gestaltet sind, dass für den Fall, dass die eventuellen Fehlersignale einen einzigen der Modulatoren als fehlerhaft angeben, der Anschluss des Modulators unabhängig von den Steuersignalen entschieden wird, dessen Betrieb fehlerfrei verläuft, und dass sie einen elektronischen Schalter (17) aufweist, dem die Schaltsignale zugeführt werden und der den durch die Schaltsignale bezeichneten Anschluss bewirkt.

2. Schaltvorrichtung nach Anspruch 1, dadurch gekennzeichnet, dass die Mittel so ausgestaltet sind, dass sie als Schaltsignale die Signale $X1 = d1 \cdot \overline{A} \cdot P \cdot d1'$ und $Y1 = d1' \cdot \overline{A} \cdot P \cdot d1$ erarbeiten, wobei X1 und Y1 die den Anschluss des einen (7) bzw. anderen Modulators (8) an den ersten Sender betreffenden Signale, d1 und d1' die eventuellen den einen (7) bzw. den anderen Modulator (9) betreffenden Fehlersignale und A und P die Steuersignale sind, die eine autonome Betriebssteuerung der beiden Sender bzw. eine Anschlusssteuerung des anderen Modulators (9) an den ersten Sender (2) darstellen.

**Claims**

1. A switching device for selecting one out of two modulators (7, 9) and for connecting it to a first transmitter (2), one of the modulators (7) being associated to the first transmitter and the other modulator (9) to a second transmitter (3), characterized in that the device receives directly possible fault signals (d1, d1') from the two modulators as well as control signals (A, P) indicating the modulator which should be connected to the first transmitter, that the device comprises electronic means (11 to 16) for elaborating in response to incoming signals, switch signals (X1, Y1) indicating the modulator which should be branched to the first transmitter, these means being conceived, if the possible fault signals indicate that only one modulator is faulty, to decide irrespectively of the control signals the connection of the modulator which is not faulty, and that it comprises an electronic switch (17) receiving the switch signals and realizing the connection indicated by the switch signals.

2. A switching device according to claim 1, characterized in that the means are conceived to generate as switch signals the signals $X1 = d1 \cdot \overline{A} \cdot P \cdot d1'$ and $Y1 = d1' \cdot \overline{A} \cdot P \cdot d1$ in which X1 and Y1 are the signal corresponding to the connection of one (7) or the other modulator (9) respectively to the first transmitter, d1 and d1' are the possible fault signals corresponding to one (7) or the other modulator (9) and A and P are the control signals representing respectively an autonomous operation control of the two transmitters or a control for connecting the other modulator (9) to the first transmitter (2).

Fig.1

0 112 221

Fig.2